# EUROPÄISCHE PATENTSCHRIFT

(11) **EP 2 317 118 B1**
(45) Veröffentlichungstag und Bekanntmachung des Hinweises auf die Patenterteilung: **14.05.2014**
(21) Anmeldenummer: 10005632.4
(22) Anmeldetag: 31.05.2010
(51) Int. Cl.: F02M 55/00, F02M 55/02, F16L 41/08

(54) **Kraftstoffverteiler**
Fuel distributor
Distributeur de carburant

(30) Priorität: 28.10.2009 DE 102009051065
(43) Veröffentlichungstag der Anmeldung: 04.05.2011
(73) Patentinhaber: Benteler Automobiltechnik GmbH, 33102 Paderborn (DE)
(72) Erfinder: Mehring, Markus, 33165 Lichtenau (DE); Hoischen, Michael, 33106 Paderborn (DE)
(74) Vertreter: Ksoll, Peter

(56) Entgegenhaltungen:
- EP-A1- 2 006 530
- DE-A1- 10 143 740
- GB-A- 2 319 824
- JP-A- 2007 021 508
- US-B1- 6 397 881

## Beschreibung

Die Erfindung betrifft einen Kraftstoffverteiler zum Zuführen von Kraftstoff zu Einspritzventilen eines Verbrennungsmotors gemäß den Merkmalen im Oberbegriff von Anspruch 1.

Bei Kraftstoffverteilersystemen sind die Druckerzeugung und die Kraftstoffeinspritzung voneinander entkoppelt. Eine Kraftstoffpumpe erzeugt kontinuierlich Druck. Dieser unabhängig von der Einspritzfolge aufgebaute Druck steht im Kraftstoffverteiler, welcher als Speicher fungiert, permanent zur Verfügung. Hierzu wird der komprimierte Kraftstoff in einem Verteilerrohr gespeichert und über Abzweigleitungen verteilt den Injektoren bzw. Einspritzventilen einer Zylinderbank zur Verfügung gestellt.

Kraftstoffverteiler zählen durch die DE 196 07 521 C1, die DE 197 53 054 C2 oder die EP 0 866 221 B1 zum Stand der Technik.

Die DE 197 44 762 A1 beschreibt eine Einspritzeinrichtung für einen Dieselmotor, bei der der Kraftstoffverteiler aus einem gezogenen oder gewalzten Rohr besteht, an das die Anschlussnippel angeschweißt oder angelötet sind. Zur Aufnahme der Anschlussnippel sind in dem Kraftstoffverteiler Einsteckbohrungen eingebracht, in welche die Anschlussnippel vor dem Verschweißen oder -löten eingesetzt werden.

Des Weiteren geht aus der EP 0 122 848 ein Verfahren zur Herstellung eines hydraulischen Anschlusses an einen Hohlkörper hervor. Hierzu ist am Hohlkörper ein stutzenförmiger Abzweig vorgesehen, auf den eine Anschlussleitung aufgesetzt wird und danach durch Verformung der Wand des Abzweigs festgelegt wird.

Bei den aus der WO 2007/033738 A2 oder der DE 38 21 827 C2 bekannten Vorschlägen zur Anbindung von Abzweigleitungen an die Verteilerrohre von Kraftstoffverteilern sind durch Gewindebuchsen ausgebildete Anschlusselemente vorgesehen. Durch mechanische Bearbeitung des Verteilerrohrs wird an diesem ein Dichtsitz erzeugt. Die Gewindebuchsen sind vergleichsweise teuer. Zudem muss die Abzweigleitung mit einem Stauchkopf oder Dichtnippel versehen werden. Die Verbindung zwischen dem Ende der Abzweigleitung und der Gewindebuchse erfolgt in der Regel über eine Überwurfmutter, was zusätzliche Kosten verursacht. Darüber hinaus ist die Montage der Abzweigleitung mit zusätzlichem Aufwand verbunden. Weiterhin besteht die Gefahr von Leckagen.

Die spanende Bearbeitung des Verteilerrohrs ist mit hohen Kosten verbunden. Zudem erweist es sich als problematisch, die im Kraftstoffbereich geforderten Sauberkeitsanforderungen zu gewährleisten, insbesondere dass keine Spanrückstände im Verteilerrohr verbleiben.

Auch Anschlusselemente in Form von Dreh- oder Frästeilen sind aufwändig und vergleichsweise teuer in ihrer Herstellung. Des Weiteren sind massive starkwandige Anschlussbauteile in Kombination mit demgegenüber relativ dünnwandigen Verteilerrohren keine ideale Kombination zum Fügen, insbesondere Löten.

Solche Ausgestaltungen finden sich sowohl in der EP 2 006 530 A1, der GB 2 319 824 A als auch in der DE 101 43 740 A1.

Der Erfindung liegt ausgehend vom Stand der Technik die Aufgabe zu Grunde, eine einfache und kostengünstige Lösung zur Anbindung von Abzweigleitungen an ein Verteilerrohr eines Kraftstoffverteilers zu schaffen, welche die Anforderungen hinsichtlich Kraftstoffdichtheit und mechanischen Beanspruchungen erfüllt.

Die Lösung dieser Aufgabe besteht nach der Erfindung in einem Kraftstoffverteiler gemäß den Merkmalen von Patentanspruch 1

Eine vorteilhafte Ausgestaltung des erfindungsgemäßen Kraftstoffverteilers ist Gegenstand des abhängigen Anspruchs 2.

Der Kraftstoffverteller weist ein Verteilerrohr zur Aufnahme von unter Druck stehendem Kraftstoff auf. Im Verteilerrohr sind mehrere, sich in radialer Richtung des Verteilerrohrs erstreckende, die Wand des Verteilerrohrs durchdringende und in den Druckraum des Verteilerrohrs mündende Abzweigbohrungen eingebracht. An die Abzweigbohrungen ist jeweils eine Abzweigleitung über einen Anschlussadapter angeschlossen. Ein Anschlussadapter ist als einstückiges Tiefziehteil oder als einstückiges Fließpressteil ausgeführt, welcher das Verteilerrohr bereichsweise radial umschließt. Hierzu besitzt ein Anschlussadapter einen an die Außenkontur des Verteilerrohrs angepassten Montageflansch, über welchen der Anschlussadapter mit dem Verteilerrohr gefügt ist. Weiterhin weist der Anschlussadapter einen radial zum Verteilerrohr ausgerichteten, mit der Abzweigbohrung korrespondierenden Stutzen auf, in welchen ein Endabschnitt einer Abzweigleitung eingreift und mit dem Stutzen gefügt ist. Erfindungsgemäß ist der Endabschnitt bis in die Abzweigbohrung geführt und dort gefügt, wobei der Anschlussadapter mittels Schweißbuckeln am Montageflansch durch Widerstandsschweißung am Verteilerrohr vorfixiert und durch eine kraftstoffdichte Fügung festgelegt ist. Der Anschlussadapter ist als Tiefziehteil oder Fließpressteil, insbesondere Kaltfließpressteil, kostengünstig mit geringstem Materialeinsatz ohne mechanische Bearbeitung realisierbar.

Über den Anschlussadapter wird eine einfach, kostengünstige Lösung zur Anbindung von Abzweigleitungen an das Verteilerrohr eines Kraftstoffverteilers realisiert. Insbesondere ist die Verbindung geeignet für Verteilerrohre mit geringen Wandstärken.

Der Stutzen am Anschlussadapter wird durch einen radial zur Umschlingungsfläche ausgeführten Durchzug hergestellt. Im Stutzen wird der Endabschnitt einer Abzweigleitung aufgenommen und gefügt. So wird eine kraftstoffdichte und mechanisch hochbelastbare Verbindung zwischen Verteilerrohr und Abzweigleitung realisiert.

Weiterhin reicht der Endabschnitt der Abzweigleitung in die Abzweigbohrung im Verteilerrohr hinein oder durchdringt die Abzweigbohrung. Der Endabschnitt ist dann vorzugsweise in der Abzweigbohrung und im Stutzen fügetechnisch festgelegt, insbesondere verlötet. Der Anschlussadapter übernimmt eine stützende Funktion zur Reduzierung von Steifigkeitssprüngen und zur Verbesserung der Schwingfestigkeit im Anbindungsbereich der Abzweigleitungen an das Verteilerrohr. Insgesamt wird hierdurch der Kraftstoffverteiler verbessert und die Lebensdauer erhöht. Diese Ausführungsform ist insbesondere für hohe und höchste Druckbeanspruchungen geeignet.

Bei der Montage bzw. Fügung des Anschlussadapters am Verteilerrohr erfolgt idealerweise eine Vorfixierung durch an der Fügefläche des Montageflanschs vorgesehene Schweißbuckel. Mittels der Schweißbuckel wird der Anschlussadapter durch Widerstandsschweißung vorfixiert und anschließend die endgültige Kraftstoffdichtheit durch Löten oder Schweißen, insbesondere Laserschweißen, erreicht.Bei einer bekannten Ausführungsform ist am Innenumfang des Stutzens ein Anschlag zur Lagepositionierung des Endabschnitts der Abzweigleitung ausgebildet. Insbesondere wird der Anschlag durch eine Materialverschiebung im Stutzen ausgebildet, und zwar durch mindestens zwei, vorzugsweise drei auf dem Innenumfang versetzt zueinander angeordnete Vorsprünge. Die durch das aufgeschobene Material im Stutzen ausgebildeten Vorsprünge dienen als axiale Begrenzung für die Einstecktiefe der Abzweigleitung und insbesondere auch eines in den Stutzen eingebrachten Lotrings für eine löttechnische Verfügung zwischen Stutzen und Abzweigleitung

Ein weiterer Vorteil des Stutzens ist, dass ein axialer Toleranzausgleich realisiert werden kann, welcher durch den Schiebesitz des Endabschnitts der Abzweigleitung im Stutzen erreicht wird. Hierdurch lassen sich Rohrlängenschwankungen der Abzweigleitung kompensieren.

Für die Praxis besonders vorteilhaft ist, dass Lotringe in axialer Richtung des Stutzens von beiden Seiten in Richtung zum Anschlag eingebracht werden können. Es erfolgt eine gemeinsame bzw. gleichzeitige Fügung des Anschlussadapters am Verteilerrohr und der Abzweigleitung im Stutzen des Anschlussadapters. Ein Bepasten der Gegenstände mit Lotpaste kann entfallen. Zudem ist auf diese Weise eine hohe Sicherheit für eine kraftstoffdichte Lötverbindung gewährleistet.

Weiterhin kann im Anschlussadapter zumindest eine Öffnung vorgesehen sein. Die Öffnung dient zur Applikation von Fügematerial, insbesondere von Lotmaterial. Darüber hinaus kann die Fügung und der Fügeprozess durch die Öffnung visuell überprüft werden. Vorzugsweise ist die Öffnung im Übergangsbereich vom Montageflansch zum Stutzen des Anschlussadapters vorgesehen.

Es ist auch eine zweistufige Montage des Anschlussadapters möglich, bei der zunächst der Anschlussadapter mit dem Verteilerrohr gefügt wird, beispielsweise durch Verlöten. Anschließend wird die Fügung der Abzweigleitung am Stutzen des Anschlussadapters vorgenommen, insbesondere durch Induktivlöten oder Laserschweißen. Hierdurch lassen sich unerwünschte Verzüge und Festigkeitsverluste durch Wärme an den Abzweigleitungen vermeiden.

Die Erfindung ist nachfolgend anhand eines in den Zeichnungen dargestellten Ausführungsbeispiels näher beschrieben. Es zeigen:
- Figur 1: in perspektivischer Darstellungsweise einen Kraftstoffverteiler;
- Figur 2: einen vertikalen Querschnitt eines bekannten Kraftstoffverteilers durch die Darstellung der Figur 1 entlang der Linie A-A und
- Figur 3: einen vertikalen Querschnitt durch einen erfindungsgemäßen Kraftstoffverteiler.

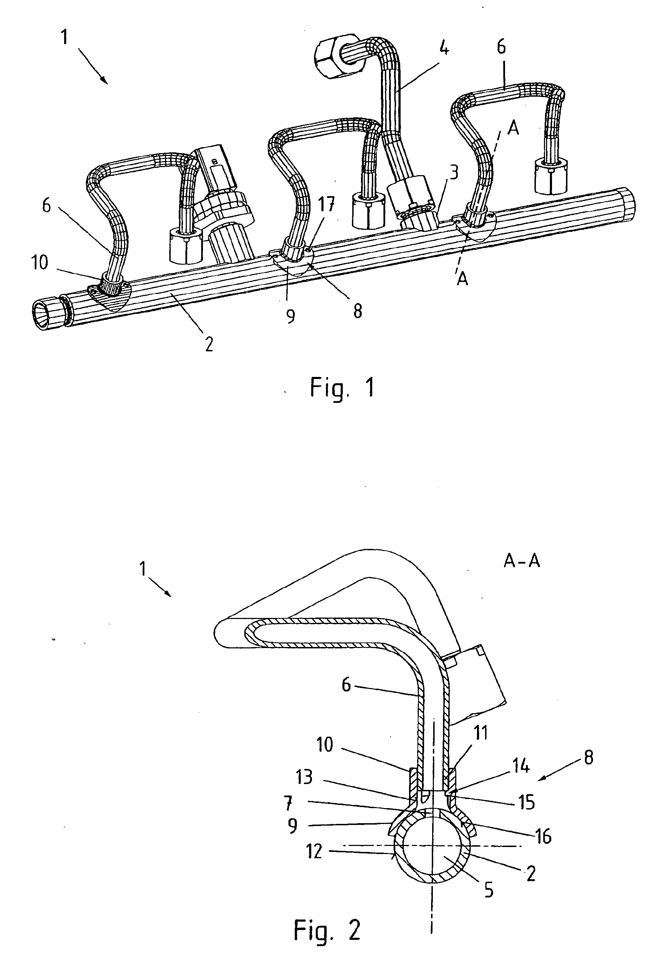

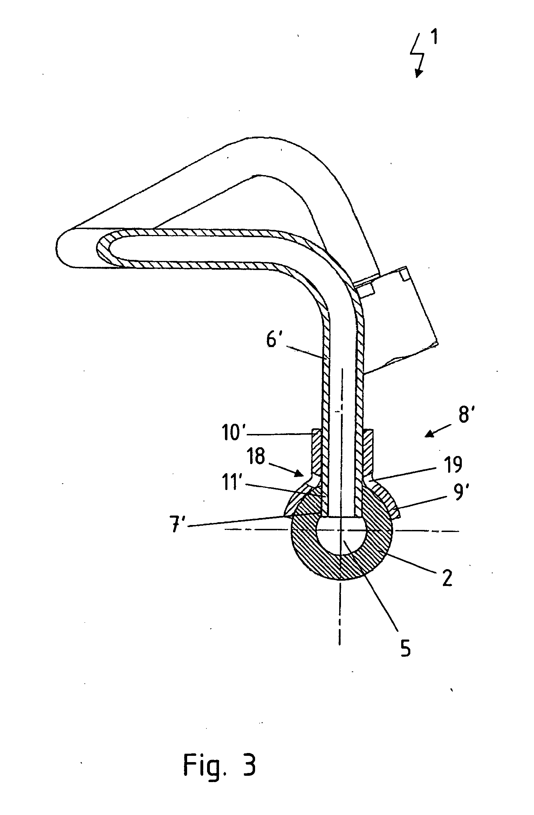

Anhand der Figuren 1 bis 2 ist ein bekannter Kraftstoffverteiler 1 erläutert. Figur 3 zeigt einen erfindungsgemäßen Kraftstoffverteiler 1, wobei einander entsprechende Bauteile bzw. Bauteilkomponenten mit synonymen Bezugszeichen versehen sind.

Der Kraftstoffverteiler 1 gehört zum Speichereinspritzsystem eines Verbrennungsmotors. Die Druckerzeugung und die Krafteinspritzung sind bei solchen Speichereinspritzsystemen voneinander entkoppelt. Eine separate Hochdruckpumpe erzeugt kontinuierlich Druck. Dieser unabhängig von der Einspritzfolge aufgebaute Druck steht im Kraftstoffverteiler 1 permanent zur Verfügung.

Der Kraftstoffverteiler 1 umfasst ein Verteilerrohr 2 mit einem pumpenseitigen Kraftstoffeinlass 3, durch welchen Kraftstoff über eine Anschlussleitung 4 in den Druckraum 5 im Innern des Verteilerrohrs 2 geführt wird. Der statisch komprimierte Kraftstoff wird im Verteilerrohr 2 gespeichert und über die Abzweigleitungen 6, 6' verteilt den Injektoren einer Zylinderbank zur Verfügung gestellt. Hierzu sind im Verteilerrohr 2 radiale Abzweigbohrungen 7, 7' vorgesehen, über welche der Druckraum 5 mit den Abzweigleitungen 6, 6' fluidleitend in Verbindung steht.

Die Abzweigleitungen 6, 6' sind jeweils über einen Anschlussadapter 8, 8' mit dem Verteilerrohr 2 verbunden. Der Anschlussadapter 8, 8' ist ein einstückiges Tiefziehteil oder ein einstückiges Fließpressteil und besitzt einen an die Außenkontur des Verteilerrohrs 2 angepassten Montageflansch 9, 9', über den der Anschlussadapter 8, 8' mit dem Verteilerrohr 2 gefügt ist. Tiefziehtechnisch oder fließpresstechnisch in Form eines Durchzugs ist am Anschlussadapter 8, 8' ein radial zum Verteilerrohr 2 ausgerichteter Stutzen 10, 10' ausgebildet, in welchen ein Endabschnitt 11, 11' der Abzweigleitung 6, 6' eingreift und hier mit dem Stutzen 10, 10' gefügt ist.

Der Montageflansch 9, 9' ist kranzförmig um den Stutzen 10, 10' ausgebildet und umschließt das Verteilerrohr 2 auf dessen Außenumfang 12 bereichsweise.

Bei der Ausführung des Kraftstoffverteilers 1 gemäß der Figur 2 ist am Innenumfang 13 des Stutzens 10 ist ein Anschlag 14 ausgebildet. Dieser dient zur Lagepositionierung des Endabschnitts 11 im Stutzen 10. Der Anschlag 14 ist durch eine Materialverschiebung am Innenumfang 13 des Stutzens 10 erzeugt, und zwar in Form von drei auf dem Innenumfang 13 versetzt zueinander angeordnete, nach innen gerichtete Vorsprünge 15. Diese dienen als axiale Begrenzung für die Einstecktiefe der Abzweigleitung 6 und auch als Positionierhilfe für im Stutzen 10 eingebrachte Lotringe, mittels derer eine lottechnische Fügung zwischen Stutzen 10 und Abzweigleitung 6 hergestellt werden kann. Die Lotringe können von beiden Seiten des Stutzens 10 eingebracht und am Anschlag 14 positioniert werden. Das unter Temperatureinfluss aufgeschmolzene Lot fixiert dann einerseits den Endabschnitt 11 der Abzweigleitung 6 im Stutzen 10 und andererseits den Montageflansch 9 am Außenumfang 12 des Verteilerrohrs 2.

An der Fügefläche 16 des Montageflanschs 9 sind Schweißbuckel 17 vorgesehen, mittels derer zum Fügen des Anschlussadapters 8 am Verteilerrohr 2 eine Vorfixierung durch Widerstandsschweißung erfolgt. Anschließend wird eine kraftstoffdichte, stoffschlüssige Fügung zwischen Montageflansch 9 und Verteilerrohr 2 vorgenommen, insbesondere durch Löten oder Schweißen.

Möglich ist auch eine zweistufige Montage, bei der zunächst der Anschlussadapter 8 mit dem Verteilerrohr 2 gefügt wird, beispielsweise durch Verlöten. Anschließend erfolgt die Fügung zwischen Abzweigleitung 6 und Anschlussadapter 8, vorzugsweise durch Induktivlöten oder Laserschweißen.

Bei der Ausführungsform des Kraftstoffverteilers 1, wie in Figur 3 dargestellt, ist der Endabschnitt 11' der Abzweigleitung 6' bis in die Abzweigbohrung 7' geführt und ragt in diese hinein. Der Endabschnitt 11' ist mit dem Verteilerrohr 2 in der Abzweigbohrung 7' und mit dem Stutzen 10' des Anschlussadapters 8' gefügt, vorzugsweise verlötet. Man erkennt, dass der Endabschnitt 11' innenseitig im Verteilerrohr 2 bündig mit der Wand des Verteilerrohrs 2 abschließt.

Der Anschlussadapter 8' übernimmt eine stützende Funktion zur Reduzierung von Steifigkeitssprüngen und zur Verbesserung der Schwingungsfestigkeit der Fügestellen und somit des Kraftstoffverteilers 1.

Man erkennt des Weiteren, dass im Übergangsbereich 18 zwischen dem Montageflansch 9' des Anschlussadapters 8' und des Stutzens 10' Öffnungen 19 vorgesehen sind. Über die Öffnungen 19 kann Fügematerial, wie ein Lotmaterial, appliziert werden. Darüber hinaus kann der Fügeprozess und die hergestellte Fügung durch die Öffnungen 19 kontrolliert und überprüft werden.

Der Fügeprozess von Anschlussadapter 8' und Verteilerrohr 2 erfolgt ansonsten wie zuvor beschrieben, so dass auf eine nochmalige Erläuterung verzichtet wird.

Die durch Tiefziehen oder Fließpressen hergestellten Anschlussadapter 8, 8' sind kostengünstig sowohl was die Herstellung als auch den Materialeinsatz anbelangt. Zudem sind sie gegenüber bekannten Vorschlägen vom Gewicht her günstiger. Der Anschlussadapter 8, 8' ist als einstückiges Tiefziehteil oder einstückiges Fließpressteil mit geringem Materialeinsatz ohne mechanische Bearbeitung realisierbar. Es wird eine einfache und kostengünstige Lösung zur Anbindung von Abzweigleitungen 6 an das Verteilerrohr 2 realisiert. Insbesondere können bei einem Kraftstoffverteiler 1 auch Verteilerrohre 2 mit einer gegenüber herkömmlichen Bauarten geringeren Wandstärke eingesetzt werden.

## Patentansprüche

1. Kraftstoffverteiler zum Zuführen von Kraftstoff zu Einspritzventilen einer Brennkraftmaschine, welcher ein Verteilerrohr (2) zur Aufnahme von unter Druck stehendem Kraftstoff aufweist, wobei im Verteilerrohr (2) Abzweigbohrungen (7, 7') vorgesehen sind, an welche jeweils eine Abzweigleitung (6, 6') über einen Anschlussadapter (8, 8') angeschlossen ist, wobei jeder Anschlussadapter (8, 8') ein einstückiges Tiefziehteil oder ein einstückiges Fließpressteil ist und einen an die Außenkontur des Verteilerrohrs (2) angepassten Montageflansch (9, 9') besitzt, über welchen der Anschlussadapter (8, 8') mit dem Verteilerrohr (2) gefügt ist und der Anschlussadapter (8, 8') einen radial zum Verteilerrohr (2) ausgerichteten Stutzen (10, 10') aufweist, in welchen ein Endabschnitt (11, 11') einer Abzweigleitung (6, 6') eingreift und mit dem Stutzen (10, 10') gefügt ist, **dadurch gekennzeichnet, dass** der Endabschnitt (11') bis in die Abzweigbohrung (7') geführt und in der Abzweigbohrung (7') gefügt ist, wobei der Anschlussadapter (8, 8') mittels Schweißbuckel (17) am Montageflansch (9, 9') durch Widerstandsschweißung am Verteilerrohr (2) vorfixiert und durch eine kraftstoffdichte Fügung festgelegt ist.

2. Kraftstoffverteiler nach Anspruch 1, **dadurch gekennzeichnet, dass** im Anschlussadapter (8'), insbesondere im Übergangsbereich (18) vom Montageflansch (9') zum Stutzen (10'), eine Öffnung (19) vorgesehen ist.

## Claims

1. Fuel distributor for supplying fuel to injection valves of an internal combustion engine, which comprises a fuel rail (2) for receiving pressurised fuel, branch bores (7, 7') being provided in the fuel rail (2), onto each of which a branch conduit (6, 6') is connected via a connection adaptor (8, 8'), each connection adaptor (8, 8') being a one-piece deep-drawn part or a one-piece extruded part and having an assembly flange (9, 9') adapted to the outer contour of the fuel rail (2), by means of which flange the connection adaptor (8, 8') is joined to the fuel rail (2), and the connection adaptor (8, 8') comprising a connection piece (10, 10') oriented radially to the fuel rail (2) and in which an end portion (11, 11') of a branch conduit (6, 6') engages and is joined to the connection piece (10, 10'), **characterised in that** the end portion (11') is guided as far as into the branch bore (7') and is fitted in the branch bore (7'), the connection adaptor (8, 8') being fixed beforehand to the fuel rail (2) by resistance welding by means of welding projections (17) on the assembly flange (9, 9') and being fixed by a fuel-tight join.

2. Fuel distributor according to claim 1, **characterised in that** an opening (19) is provided in the connection adaptor (8'), in particular in the transition region (18) from the assembly flange (9') to the connection piece (10').

## Revendications

1. Distributeur de carburant servant à amener du carburant à des soupapes d'injection d'un moteur à combustion interne, lequel distributeur de carburant présente un tuyau distributeur (2) servant à recevoir du carburant sous pression, où le tuyau distributeur (2) comprend des alésages de déviation (7, 7'), auxquels est raccordée respectivement une ligne de déviation (6, 6') par l'intermédiaire d'un adaptateur de raccordement (8, 8'), où chaque adaptateur de raccordement (8, 8') constitue une pièce d'emboutissage profond réalisée d'un seul tenant ou une pièce d'extrusion réalisée d'un seul tenant et comporte une bride de montage (9, 9') adaptée au contour extérieur du tuyau distributeur (2), par l'intermédiaire de laquelle bride de montage l'adaptateur de raccordement (8, 8') est assemblé au tuyau distributeur (2), et l'adaptateur de raccordement (8, 8') présente une tubulure (10, 10') orientée radialement par rapport au tuyau distributeur (2), avec laquelle tubulure une section d'extrémité (11, 11') d'une conduite de déviation (6, 6') vient en prise et ladite section d'extrémité étant assemblée à la tubulure (10, 10'), **caractérisé en ce que** la section d'extrémité (11') est guidée jusque dans l'alésage de déviation (7') et est assemblée à l'alésage de déviation (7'), où l'adaptateur de raccordement (8, 8') est fixé au préalable au niveau du tuyau distributeur (2), au moyen de bossages de soudure (17) au niveau de la bride de montage (9, 9'), grâce à un soudage par résistance et est bloqué par un système d'assemblage étanche au carburant.

2. Distributeur de carburant selon la revendication 1, **caractérisé en ce qu'**un orifice (19) est prévu dans l'adaptateur de raccordement (8'), en particulier dans la zone de transition (18) allant de la bride de montage (9') à la tubulure (10').
